Europäisches Patentamt

European Patent Office

Office européen des brevets

(19)

(11) Publication number: **0 010 836**
**B1**

(12) **EUROPEAN PATENT SPECIFICATION**

(45) Date of publication of patent specification: **28.07.82**

(51) Int. Cl.³: **A 01 G 31/00**

(21) Application number: **79301532.2**

(22) Date of filing: **31.07.79**

(54) Method for growing hydroponic grass from cereal grain seeds.

(30) Priority: **09.10.78 GB 3975478**

(43) Date of publication of application:
**14.05.80 Bulletin 80/10**

(45) Publication of the grant of the patent:
**28.07.82 Bulletin 82/30**

(84) Designated Contracting States:
**AT BE CH DE FR IT LU NL SE**

(56) References cited:
**DE - B - 1 806 886**
**FR - A - 1 266 589**
**US - A - 2 928 211**
**US - A - 3 458 951**
**US - A - 3 755 158**
**US - A - 4 068 405**

(73) Proprietor: **TOMBRA-RODAN SOCIEDAD ANONIMA**
**Calle Elvira Mendez No. 10/2 piso**
**Panama-City (PA)**

(72) Inventor: **Brady, John Richard**
**General Martinez Campos 20**
**Madrid-10 (ES)**

(74) Representative: **Smith, Norman Ian et al,**
**F.J. CLEVELAND & COMPANY 40-43 Chancery Lane**
**London WC2A 1JQ (GB)**

Courier Press, Leamington Spa, England.

## Method for growing hydroponic grass from cereal grain seeds

This invention relates to a method for growing hydroponic grass from cereal grain seeds.

Apparatus and methods for growing grass from cereal grains are well known. For example, see U.S. - A - 2,928,211, issued 15th March 1960 to Ivan Z. Martin.

Prior art methods for growing hydroponic grass from cereal grain seeds generally included the steps of forming a seed bed, forming an aqueous hydroponic nutrient solution of a phosphate plant nutrient, periodically applying an excess quantity of the nutrient solution to the seed bed and draining the excess nutrient therefrom.

Prior art hydroponic grass-growing apparatus generally included an enclosure, a rack for supporting seed-filled trays in the enclosure, a sump for containing a quantity of the hydroponic nutrient solution, means for periodically withdrawing and supplying the nutrient solution to the seed bed, and fixtures within the enclosure for supplying light to the plants growing from the seed bed. In later variations of such equipment, the enclosure was hermetically sealed and heating and cooling units were provided to maintain desired temperature and humidity conditions within the enclosure.

While the prior art apparatus is capable of growing hydroponic grass of acceptable quality and at acceptable production rates for short periods of time under ideal ambient conditions and utilising exceptionally skilled operators, the hydroponic grass machines and methods of the prior art proved to be unacceptable on a practical basis due to a series of interrelated mechanical and operational difficulties, under extreme ambient temperature conditions and in areas of the world where highly skilled operating and maintenance personnel are unavailable.

The principal problems associated with the prior art methods and apparatus for growing hydroponic grass may be summarised as follows.

First, acceptable production rates were difficult to achieve, even on a short-term basis, because of the difficulty of evenly distributing the hydroponic nutrient solution over the entire seed bed. Thus, certain areas of the seed bed would receive insufficient solution and the seeds would not germinate properly and the grass from those seeds which did germinate was stunted and of very poor quality. In other areas, the seed bed received too much nutrient solution and did not drain properly, thereby causing the seeds to decay before proper germination and exacerbating the mold growth problem which will be described below.

Another serious problem which was encountered by prior workers was the tendency of molds to form in the germinating seed bed and on the root mass of the growing plants. These molds not only reduced the germination rate of the seeds, but also caused decay and disintegration of the root mass of the growing grass plants, reducing the grass production rate and causing the animals to reject the grass as food.

In an attempt to increase production rate, prior workers provided hermetically sealed enclosures for the seed beds to increase the humidity and promote rapid plant growth. Substantially simultaneously, heaters and cooling units were provided to maintain the temperature conditions within the enclosures at optimum plant growth levels.

The introduction of controlled temperature and humidity conditions further exacerbated the mold problem in that the conditions most favourable for optimum grass plant growth were also most favourable for mold growth.

Finally, difficulties were often experienced by prior workers in preparing and maintaining hydroponic nutrient solutions having the proper balance of plant nutrient elements. In this connection it is well known that plants and particularly grass plants grow at increased rates when they obtain a properly balanced combination of essential plant growth nutrients, such as phosphates and nitrogen, and when they are provided with essential trace metal nutrients. This information is well documented in the fertilizer arts and will not be discussed in further detail at this point, except to point out that the problem of proper plant nutrition is inextricably related to the problems of low production rate mentioned above in hydroponic grass growing apparatus as failure to provide the seeds and the growing grass with proper major and trace nutrients restricts germination and grass growth rate, lengthening the growing cycle and increasing the probability that molds will form and grow in the hydroponic growing chamber, which even further reduces the production rate of the apparatus.

According to the present invention there is provided a method for growing hydroponic grass from cereal grain seeds, said method including the steps of forming a seed bed, forming a supply of hydroponic nutrient solution including water and a water-soluble phosphate plant nutrient, periodically withdrawing from said supply a quantity of said nutrient solution in excess of that required to saturate said seed bed and applying said quantity to said seed bed, and draining said excess nutrient from said seed bed, characterised by the steps of:

(a) pre-treating the water used to form said nutrient solution by separating therefrom impurity metal ions which form water-insoluble impurity metal phosphates using as a precipitating agent the phosphate nutrient, and

(b) dissolving said water-soluble phosphate in said pre-treated water to form said nutrient solution.

The invention will be described now by way of example only with particular reference to the accompanying drawings. In the drawings:

Figure 1 is a partial cut away perspective view of a hydroponic grass growing unit;

Figure 2 is a partial elevation view showing certain details of the nutrient supply piping and lighting fixture details of the unit of Figure 1;

Figure 3 is a partial sectional view taken at right angles to the sectional view of Figure 2;

Figure 4 is a partial sectional plan view of the portion of the unit illustrated in Figures 2 and 3, taken along section line 4—4 thereof;

Figure 5 is an elevational view showing a typical one of the spray nozzles mounted on its nutrient supply conduit;

Figure 6 is a plan view of the nozzle and nutrient spray conduit of Figure 5, illustrating the preferred angular relationship thereof;

Figure 7 is a perspective view of one of the tray support posts of the unit of Figure 1;

Figure 8 is a partial cut-away perspective view of one of the light fixtures of the unit of Figure 1, and

Figure 9 is a plan sectional view of the unit of Figure 1 with all other components except the lighting fixtures omitted to illustrate the placement of the fixtures within the unit.

The description will be given with reference to an improvement in prior art hydroponic grass growing methods which improvement has the combined effect of effectively eliminating mold growth and of increasing plant growth rate, both of which effectively increase the hydroponic grass production rate.

Thus we provide improvements in prior art methods for growing hydroponic grass from cereal grain seeds. Such prior art methods normally included the steps of forming a seed bed, forming a supply of hydroponic nutrient solution including water and a water-soluble phosphate plant nutrient, periodically withdrawing from the nutrient supply a quantity of solution in excess of that required to saturate the seed bed and applying this excess quantity to the seed bed, and draining the excess nutrient therefrom.

Prior art nutrient solutions were generally formed by simply dissolving a water-soluble phosphate plant nutrient such as mono or diammonium phosphate in whatever raw water was locally available. Certain prior art methods also envisioned adding trace metal nutrients to the phosphate solutions. However such prior art nutrient solution-forming techniques did not yield solutions which provided optimum grass plant growth rate where the raw water contains moderate or high concentrations of impurity metal ions which form insoluble compounds of the impurity metal with phosphates.

The principal impurity metal of concern is aluminium, but the techniques described below are equally applicable to forming hydroponic nutrient solutions utilising raw water containing any other impurity metals which form insoluble phosphates in the nutrient solution. Aluminium impurities in the raw water from which the nutrient solutions are prepared are particularly troublesome since, at the nutrient solution pH levels required for optimum plant growth, the insoluble aluminium phosphate formed by reaction between the aluminium ions of the raw water and the phosphate ions introduced by dissolving the phosphate plant nutrient therein precipitates as a gelatinous floc which appears to form a complex with and remove desired trace metal plant nutrients from the nutrient solution. Also, the floc precipitate is circulated through the plumbing system and is deposited on the seed bed and the growing grass plants and apparently forms incubation sites which are conducive to mold development and growth. Thus, wholly apart from the effect of the impurity metal in reducing the phosphate and trace metal concentrations in the nutrient solution to below their respective optimum levels, the physical form of the impurity metal precipitates exacerbates the mold-growth problems of the prior art. According to the present improvements the raw water utilised to form the hydroponic nutrient solution is pre-treated to separate impurity metal ions therefrom which form water-insoluble metal phosphates and, in a second step, the water-soluble phosphate plant nutrient is then dissolved in the pre-treated water to form the nutrient solution without the precipitation of the impurity metal phosphates. The impurity metal ions may be separated from the raw water by any suitable art-recognised technique, such as, for example, by treating the raw water with ion exchange resins, by column chromatography or by treating the raw water with a stoichiometric excess of a reagent which precipitates the impurity metal and then separating the precipitate by filtration, decantation or other suitable technique.

The separation of impurity metal ions from the raw water by treating it with a precipitating reagent is generally preferable from the standpoint of cost and simplicity. However, one must be careful to employ a precipitating reagent which does not, itself, have a deleterious effect upon seed germination and plant growth. While many such precipitating reagents can be selected, having regard for published information concerning their chemical characteristics and their effect upon seed germination and plant life, we have now discovered that it is highly advantageous to employ as the impurity metal precipitating agent the very phosphate nutrient compound which is to be dissolved in the treated water to form the nutrient solution. In this fashion, it is assured that any of the precipitating reagent in excess of that required to precipitate the impurity metal will not decrease the seed germination or plant growth rate.

Therefore, in accordance with the presently preferred embodiment of the invention, the raw water is mixed with an initial quantity of ammonium phosphate which is at least stoichiometrically equivalent and preferably in stoichiometric excess of that required to precipitate the impurity metal ions from the raw water. After the ammonium phosphate is dissolved in the raw water, the precipitated impurity metal phosphate is separated by allowing the precipitate to settle and decanting the supernatant. This separation step, whether accomplished by the preferred decantation technique described above or any other suitable technique, is important in the practice of the invention for two reasons. First, the metal impurity precipitate appears to form insoluble metal complexes with trace metal nutrients such as magnesium, boron, etc., and either eliminates them or reduces their concentration in the final nutrient solution to below optimum levels. Second, as mentioned above, the impurity metal precipitates are circulated in the nutrient liquid distribution system and are deposited on the seeds and plants in the growing beds. The tendency toward mold formation and growth in the seed beds is markedly increased by the presence of these insoluble phosphate precipitates which apparently provide a culture medium for the mold spores.

After the insoluble impurity metal precipitates are separated from the treated supernatant, an appropriate further quantity of ammonium phosphate is dissolved in the supernatant along with minor effective quantities of water-soluble compounds which yield trace metal plant nutrient ions. Since the impurity metal ions have been removed from the raw water, the phosphate and trace metal compounds can be dissolved in the treated water without the formation of insoluble impurity metal phosphates and without forming insoluble complexes between the impurity metal phosphates and the trace metal ions.

According to another feature it has been discovered that the trace metal plant nutrients tend to be concentrated in the root mass which is formed when the seeds in the growing bed germinate and the hydroponic grass grows upwardly therefrom. Since many of the same trace metals which have been identified as promoting rapid plant growth have also been identified as having beneficial nutritional effects in animals which eat the hydroponic grass, it would be desirable to increase the proportion of root structure in the mature grass plant. The practical limits of such techniques are reached, however, if the promotion of the growth of the plant root structure proceeds at a rate and to an extent which is detrimental to the development and proper growth to maturity of the blade and stem portion of the grass plant.

We have now discovered that the growth rate and total final proportion of root structure of the grass plant can be markedly improved without deleteriously affecting the development and growth of the stem and blade portions of the grass plant by incorporating in the hydroponic nutrient solution an effective quantity of ammonium sulfate. The ammonium sulfate is incorporated in the nutrient solution in an amount of from about 5% to 20% of the weight of ammonium phosphate dissolved therein. Depending on other conditions, this produces an increase in the weight of the grass produced per unit time of approximately 10% to 15% and, significantly, virtually the entire increased weight is due to the higher proportion of the root structure of the grass plants.

Prior art hydroponic grass growing apparatus typically included floor, ceiling and side walls defining an enclosure, means in the enclosure for supporting a plurality of substantially horizontal seed bed trays in side-by-side relationship, extending inwardly from the side walls and forming elongate rows therealong, the rows being spaced vertically apart from the floor to the ceiling of the enclosure. A sump is provided for containing a hydroponic nutrient solution and means for periodically withdrawing a quantity of the solution from the sump in excess of the quantity required to saturate the seeds in the trays and the grass plants growing therefrom and for applying this excess quantity to the seeds and the grass plants. Further, means are provided for supplying light to the growing plants.

The means for withdrawing the solution and applying it to the seeds and grass plants include a plurality of spray nozzles for projecting a substantially flat diverging spray pattern in a plane substantially parallel to the trays. The spray pattern for each one of the rows of trays is provided by a series of nozzles spaced above the row and just below the row stacked vertically thereabove. The nozzles for each one of the rows are spaced horizontally along an edge of the row to project the nutrient solution toward the other edge thereof. The horizontally spaced nozzles for each row are angularly directed toward a next-adjacent nozzle, such that the spray patterns from pairs of adjacent nozzles converge above the row forming an interference pattern, causing the nutrient solution to form a fine mist which settles uniformly upon the seeds and the plants in the row therebelow.

According to the present embodiment the horizontally spaced nozzles which form the interference spray pattern for each of the rows of seed bed trays are carried by horizontal nutrient distribution manifolds. The manifolds are supported on stand-offs from the side walls to space the manifold inwardly therefrom a distance sufficient to permit hand-cleaning the side walls behind the horizontal manifolds.

The structure also comprises a plurality of vertical support posts extending between the floor and the ceiling of the enclosure and spaced inwardly from the side walls of the enclosure a distance less than the length of the trays. The support posts are spaced horizontally along the length of the rows and carry a plurality of horizontal vertically spaced rails. The vertical spacing of the rails is equal to the desired vertical spacing of the rows of seed bed trays, the front ends of which are supported on the rails. Means carried by the side walls of the enclosure support the rear end of the seed bed trays.

In the preferred embodiment the means for supporting the rear ends of the seed-growing trays comprise an upwardly opening horizontal channel member, one side of which is sealingly engaged and affixed to the side wall of the enclosure and the upper edge of the other side of the channel forms a support for the rear edges of the seed bed trays in each of the rows. The channel functions to receive excess nutrient solution draining from the rear edges of the trays, to prevent the excess nutrient solution from falling onto the trays in the next row therebelow.

The means for supplying light to the growing plants comprise a plurality of vertically elongate, hermetically sealed fluorescent fixtures having translucent side and front walls which permit transmission of light from elongate fluorescent light bulbs which are enclosed within the fixture and supported on the back thereof. Stand-off members which are sealingly engaged with and which extend inwardly from the side walls are provided to support the fixtures in operative position. The length of the stand-offs is sufficient to permit hand-cleaning of the side walls behind the fixtures and the backs of the fixtures.

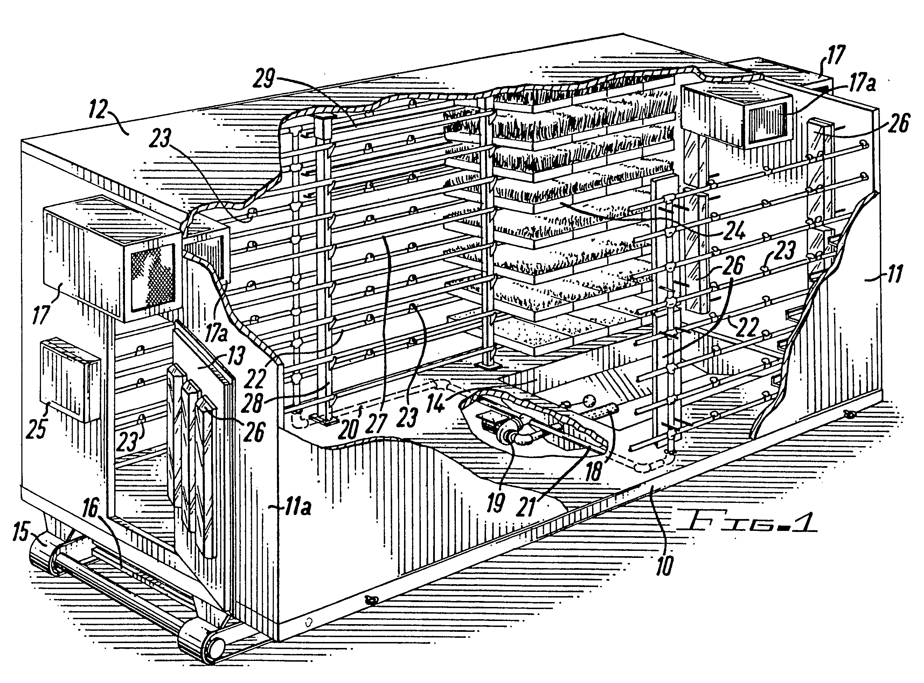

Turning now to the drawings, a hydroponic growing apparatus is depicted for purposes of illustration in Figure 1 as a cut-away perspective view in which certain of the elements described above are omitted for purposes of clarity of illustration. The grass growing unit of Figure 1 consists of a floor 10, side walls 11 and 11a, and a ceiling 12, which are joined at their respective common edges to form the enclosure. The floor, side walls and ceiling are sandwich panels consisting of mold-formed polyester-impregnated fibreglass sheets bonded with resin to a core of expanded PVC. The resulting structure has very high mechanical integrity and provides excellent insulation qualities. For use in areas having extreme ambient temperatures such as those encountered in North Africa and the Middle East, the thickness of the fibreglass is at least 3 mm and the PVC foam is at least 50 mm thick. Therefore, the total thickness of the walls and floor of the enclosure is at least 56 mm and the roof 76 mm. An entrance door 13 in an end wall 11a is provided for access to the interior of the enclosure. The floor 10 is formed to provide a sump 14 for hydroponic nutrient solution.

As an aid in cleaning and sterilising the unit, to prevent mold formation, all interior angles formed by the roof, side walls and floor and by the end walls and bottom surfaces of the sump are rounded to a minimum radius of 6 mm using fibreglass-filled resin which is smoothly finished and feathered against the adjacent surfaces.

The entire enclosure is supported by a steel subframe consisting of longitudinal I-beams 15 and transverse I-beams 16 extending between and spaced along the longitudinal I-beams 15.

In the presently preferred commercial embodiment of the apparatus of Figure 1, the unit is approximately 7 metres long, 3 metres wide and 3.3 metres high.

Refrigeration-heating units 17 extend through the end walls of the enclosure. These units include refrigeration systems of 9496—12661 K Joules capacity each (depending on the expected ambient temperature conditions) and are also provided with heating coils. Circulation fans contained within the inner portion 17a of the units 17 circulate cooled or heated air throughout the enclosure. The refrigeration-heating units are thermostatically controlled to maintain the temperature within the unit to 20° ± 1°C under ambient temperature conditions ranging from 5°C to 55°C.

During the irrigation cycle, nutrient liquid contained in the sump 14 is withdrawn through a strainer 18 to the inlet of a centrifugal pump 19 which discharges the nutrient liquid under pressure into conduits 20 and 21 which feed horizontal nutrient distribution manifolds 22 extending lengthwise of the enclosure near the side walls 11. The nutrient solution is dispensed through spray nozzles 23 which project the nutrient liquid across the seed bed trays 24 to irrigate the seeds and the grass plants growing therefrom. A control panel 25 is located outside the access door 13 on the exterior of the unit and houses the thermostat controls, the timer controls for the pump and the circuit breakers for the electrical system of the unit. Fluorescent light fixtures 26 are provided at locations spaced along the interior side walls to provide the necessary light energy for optimum plant growth.

The growing trays 24 are supported toward their inner ends on horizontal rails 27 carried on support posts 28 and the outer ends of the growing trays 24 are supported on channel members 29 extending along and affixed to the interior surface of the side walls.

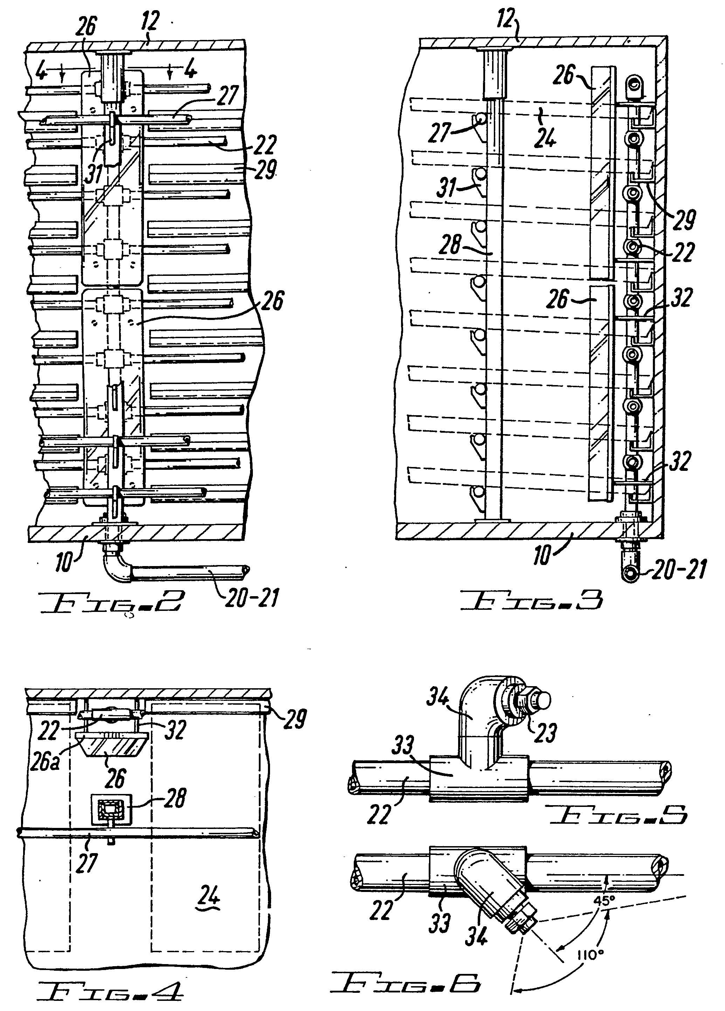

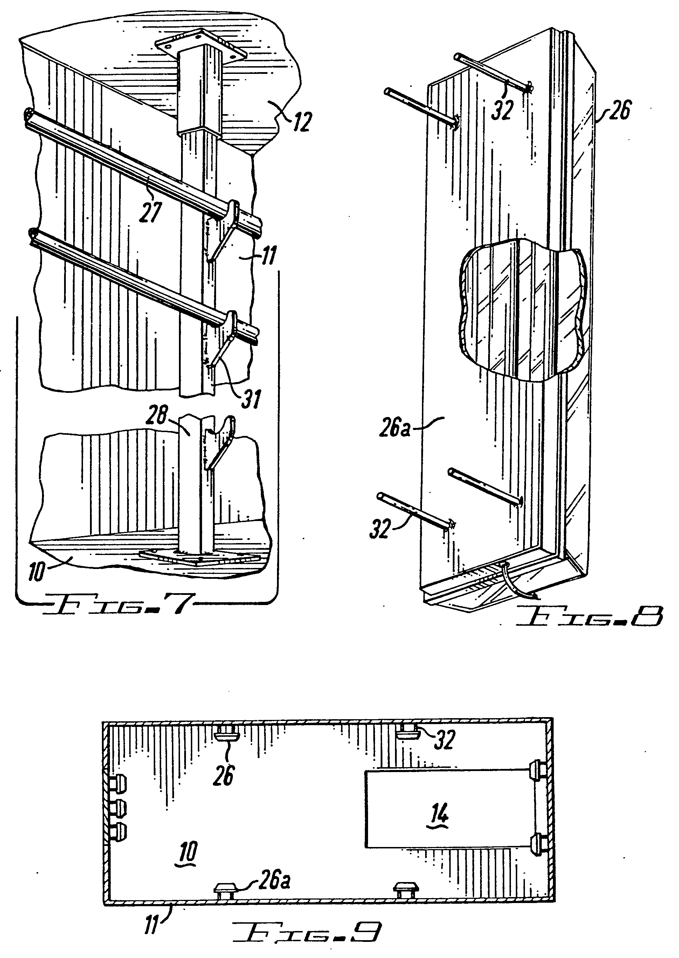

Further details of the installation of the nutrient supply system, the seed bed tray support system and the lighting system of the hydroponic grass-growing unit of Figure 1 are supplied in Figures 2 to 9, in which like reference characters indicate the same elements in the several views.

The seed bed trays 24 (shown by dashed lines) rest on horizontal rails 27 carried in brackets 31 fixed to support posts 28 which extend from the floor 10 to the ceiling 12 of the enclosure. The outer edges of the trays 24 rest on the inner edge of horizontal channels 29 which are fixed to the side walls 11 of the enclosure. Elongate light fixtures 26 enclose fluorescent bulbs carried on the back 26a of the fixture. The sides and front of the fixture 26 are translucent. The fixtures 26 are supported by means of stand-offs 32 which extend between the side walls 11 of the enclosure and the backs 26a of the fixtures 26.

The plumbing for the nutrient liquid distribution system consists of the nutrient liquid distribution conduit 20—21 which extends horizontally from the pump 19 (Figure 1) upwardly through the floor 10 and carries nutrient liquid under pressure to the horizontal nutrient liquid distribution manifolds 22. Referring more specifically to Figures 5 to 6, spray nozzles 23 are carried by means of tees 33 and ells 34 at spaced points along the horizontal distribution manifolds 22. As shown in Figure 6, the spray nozzles 23 are directed at an angle to the distribution conduit 22 and produce a diverging spray pattern. The angle of divergence of the spray pattern and the angle which the spray nozzle makes with the distribution conduit 22 will vary according to the spacing of the nozzles 23 along the horizontal distribution conduits 22. The important criteria in selecting these angles and spacings is that the spray pattern emitted by each individual nozzle overlaps and interferes with the spray pattern from its next-adjacent nozzles. In this fashion, the interference between the spray patterns causes atomization of the nutrient liquid to form a fine mist which settles evenly upon the seeds and the growing grass plants. For example, in the presently preferred embodiment of this feature of the invention, we employ so-called "Vee-Jet" nozzles manufactured by Spray Systems Co., of the U.S.A. (part No. H 1/4 VV—11004) which emit a diverging flat spray pattern at 2,8 bar of 110°. These nozzles angled at approximately 45° from the horizontal distribution manifold 22 (as shown in Figure 6) will produce the desired interference spray pattern when spaced apart 615 mm along the manifold 22. The essential distinction between the spray system employed in accordance with the present embodiment is that the nutrient liquid is sprayed horizontally across the growing trays with adjacent spray patterns interfering to atomize the nutrient liquid and form a fine mist, whereas in the prior art systems, the nutrient liquid was sprayed virtually downwardly onto the seeds and the growing grass plants. This made it impossible to achieve efficient even distribution of the nutrient liquid across the entire area of the seed bed since, as the seed in the trays germinates and grows upwardly toward the downwardly projecting spray nozzles, the effective area covered by the spray progressively decreases, leading to over-irrigation directly beneath the spray nozzle and dry spots spaced away from the projected centreline of the nozzle.

In summary, each of the above described improvements in the prior art methods for growing hydroponic grass can be related to the others and the improvements have the combined effect of increasing the long term productivity and reliability of operation of the apparatus. The improvements in the method of forming the hydroponic solution not only increase the growth rate of the plants and improve their nutritional quality, but also eliminate the deposition of mold-growth promoting materials on the seeds and the growing plants.

## Claims

1. A method for growing hydroponic grass from cereal grain seeds, said method including the steps of forming a seed bed, forming a supply of hydroponic nutrient solution including water and a water-soluble phosphate plant nutrient, periodically withdrawing from said supply a quantity of said nutrient solution in excess of that required to saturate said seed bed and applying said quantity to said seed bed, and draining said excess nutrient from said seed bed, characterised by the steps of:

(a) pre-treating the water used to form said nutrient solution by separating therefrom impurity metal ions which form water-insoluble impurity metal phosphates using as a precipitating agent the phosphate nutrient, and

(b) dissolving said water-soluble phosphate in said pre-treated water to form said nutrient solution.

2. A method according to claim 1 wherein said phosphate plant nutrient is ammonium phosphate and in which said impurity metal ions are separated by

(a) mixing said water with an initial quantity of ammonium phosphate at least stoichiometrically equivalent to the impurity metal ions in solution in said water;

(b) forming a precipitate of said impurity metal phosphate;

(c) separating said impurity metal phosphate precipitate from said water, and

(d) dissolving a nutrient quantity of said ammonium phosphate in said pre-treated water.

3. A method according to claim 2 including the further step of mixing with said pre-treated water minor effective quantities of compounds which dissolve therein to yield trace metal plant nutrient ions.

4. A method according to claim 2 including the further step of dissolving in said nutrient solution an effective quantity of ammonium sulphate.

## Patentansprüche

1. Hydrokulturverfahren zur Anzucht von Gras aus Getreidesaat, enthaltend die Verfahrensschritte:

Anlegen eines Treibbeetes für das Saatgut, Anlegen eines Vorrats einer Nährlösung aus Wasser und aus einem wasserlöslichen Phosphatnährstoff für die Hydrokultur, periodisches Entnehmen einer größeren Menge Nährlösung aus dem Vorrat als zur Sättigung des Treibbeetes erforderlich ist, Zuführen der Menge zu dem Treibbeet und Ablaufen der überschüssigen Nährlösung von dem Treibbeet, gekennzeichnet durch die folgenden Verfahrensschritte:

(a) Vorbehandeln des zur Herstellung der Nährlösung verwendeten Wassers zur Entfernung von verunreinigenden Metallionen, die wasserunlösliche Metallphosphate bilden, unter Verwendung des Phosphatnährstoffs als Fällungsreagens und

(b) Auflösen des wasserlöslichen Phosphats in dem so vorbehandelten Wasser zur Herstellung der Nährlösung.

2. Verfahren nach Anspruch 1, dadurch gekennzeichnet, daß der Phosphatnährstoff Ammoniumphosphat ist und daß die Herstellung der Nährlösung unter Abscheidung der verunreinigenden Metallionen die Schritte umfaßt:

(a) Zugeben einer ersten Menge von Ammoniumphosphat zu dem Wasser, die der Menge von verunreinigenden Metallionen in dem Wasser mindestens stöchiometrisch aquivalent ist,

(b) Ausfällen des Phosphats der verunreinigenden Metallionen,

(c) Abtrennen der Metallphosphate von dem Wasser, und

(d) Zugeben einer zweiten Menge von Ammoniumphosphat zu dem vorbehandelten Wasser entsprechend der Nährstoffmenge.

3. Verfahren nach Anspruch 2, dadurch gekennzeichnet, daß dem vorbehandelten Wasser geringfügige wirksame Mengen von Stoffen zugesetzt werden, die sich darin unter Bildung von Spurenmetallionen für die Pflanzendüngung lösen.

4. Verfahren nach Anspruch 2, dadurch gekennzeichnet, daß in einem weiteren Verfahrensschritt eine wirksame Menge von Ammoniumsulfat in der Nährlösung gelöst wird.

## Revendications

1. Procédé de culture hydroponique de fourrage à partir de graines de céréales, ce procédé comprenant les phases de formation d'un lit de graines, de préparation d'une alimentation de solution nutritive hydroponique comprenant de l'eau et un agent nutritif phosphaté, soluble dans l'eau, pour les plantes, de prélèvement périodique, à partir de cette alimentation, d'une quantité de solution nutritive en excès par rapport à celle nécessaire pour la saturation du lit de graines et d'application de cette quantité à ce lit de graines, et d'égouttage de l'excès de solution nutritive depuis le lit de graines, caractérisé par les phases suivantes:

(a) le traitement préalable de l'eau utilisée pour former la solution nutritive susdite en séparant de celle-ci les ions métalliques constituant des impuretés et formant des phosphates métalliques d'impureté insolubles dans l'eau, en utilisant, comme agent de précipitation, l'agent nutritif phosphaté, et

(b) la dissolution du phosphate soluble dans l'eau, dans l'eau préalablement traitée pour former la solution nutritive.

2. Procédé suivant la revendication 1, dans lequel l'agent nutritif phosphaté pour les plantes est du phosphate d'ammonium et dans lequel les ions métalliques constituant des impuretés sont séparés par:

(a) mélange de l'eau susdite avec une quantité initiale de phosphate d'ammonium, au moins équivalant du point de vue stoechiométrique aux ions métalliques constituant des impuretés, se trouvant en solution dans cette eau;

(b) formation d'un précipité du phosphate métallique d'impureté;

(c) séparation de ce précipité de phosphate métallique d'impureté à partir de l'eau, et

(d) dissolution d'une quantité nutritive de phosphate d'ammonium dans l'eau préalablement traitée.

3. Procédé suivant la revendication 2, comprenant la phase supplémentaire de mélange avec cette eau préalablement traitée, de petites quantités efficaces de composés qui s'y dissolvent pour donner des ions nutritifs pour les plantes, formés par des métaux en traces.

4. Procédé suivant la revendication 2, comprenant la phase supplémentaire de dissolution dans la solution nutritive, d'une quantité efficace de sulfate d'ammonium.

Fig-1

FIG-2

FIG-3

FIG-4

FIG-5

FIG-6

FIG-7

FIG-8

FIG-9